# EUROPÄISCHE PATENTSCHRIFT

(11) **EP 1 024 047 B1**
(45) Veröffentlichungstag und Bekanntmachung des Hinweises auf die Patenterteilung: **23.04.2003**
(21) Anmeldenummer: 99123258.8
(22) Anmeldetag: 29.11.1999
(51) Int. Cl.: B60N 2/22

(54) **Rastbeschlag für Fahrzeugsitz**
Locking device for vehicles
Dispositif de verrouillage pour véhicules

(30) Priorität: 28.01.1999 DE 19904299
(43) Veröffentlichungstag der Anmeldung: 02.08.2000
(73) Patentinhaber: KEIPER GmbH & Co.KG, 67657 Kaiserslautern (DE)
(72) Erfinder: Vossmann, Gregor, 48691 Vreden (DE)
(74) Vertreter: Patentanwälte Hosenthien-Held und Dr. Held

(56) Entgegenhaltungen:
- DE-A- 4 419 411
- DE-A- 19 737 637
- US-A- 6 024 410

## Beschreibung

Die Erfindung betrifft einen Rastbeschlag für einen Fahrzeugsitz, insbesondere für einen Kraftfahrzeugsitz, mit den Merkmalen des Oberbegriffs des Anspruches 1. Ein derartiges Rastbeschlag ist zum Beispiel aus der DE-A 19737637 bekannt.

Bei einem bekannten Rastbeschlag dieser Art ist das Beschlagoberteil auf einem Lagerelement gelagert, das wiederum im Beschlagunterteil gelagert ist. Das in einem Bauraum zwischen dem Beschlagoberteil und dem Beschlagunterteil angeordnete und als komplizierter Kragenzug ausgebildete Lagerelement dient zugleich auch als Steuerscheibenelement zur Bewegung zweier Riegel, die zum Einrasten des Rastbeschlages in einer Führung geführt radial nach außen gedrückt werden. Das kombinierte Lager- und Steuerscheibenelement sitzt direkt auf einer Stange, die nach dem Einbau des Rastbeschlages in einen Fahrzeugsitz zum Beschlag auf der anderen Seite und zu einer Einstellvorrichtung führt. Durch Drehung der Stange dreht sich das Lager- und Steuerscheibenelement und bewegt dadurch die Riegel.

Der Erfindung liegt die Aufgabe zu Grunde, einen Rastbeschlag der eingangs genannten Art zu verbessern. Diese Aufgabe wird erfindungsgemäß durch einen Rastbeschlag mit den Merkmalen des Anspruches 1 und durch einen Fahrzeugsitz mit den Merkmalen des Anspruches 10 gelöst. Vorteilhafte Ausgestaltungen sind Gegenstand der Unteransprüche.

Dadurch, daß zwischen dem Steuerelement und der Stange ein Übertragungselement vorgesehen, braucht kein so kompliziert aufgebautes Steuerelement mehr verwendet werden, was die Herstellung des Rastbeschlages vereinfacht und verbilligt. Dabei ist das Übertragungselement zugleich als Axialsicherung zum Zusammenhalt von Beschlagoberteil und Beschlagunterteil ausgebildet ist, und zwar in erster Linie als Montage- und Transportsicherung. Eine Übertragung hoher Lasten in axialer Richtung ist nicht erforderlich, da hierfür in der Regel gesonderte Haltebleche vorgesehen sind. Flanschabschnitte an der Axialsicherung, welche auf den voneinander abgewandten Außenseiten des Beschlagoberteils und des Beschlagunterteils anliegen, haben den Vorteil, daß sie abdichtend wirken und beispielsweise bei einer Tauchlackierung einen Lackeintritt in das Innere des Rastbeschlages verhindern.

Zur einfacheren Herstellung und Montage ist es von Vorteil, wenn das Übertragungselement aus zwei gleichen Hälften besteht. Die beiden Hälften des Übertragungselementes sind vorzugweise im Inneren des Rastbeschlags, also im Bereich zwischen Beschlagoberteil und Beschlagunterteil zusammengefügt, so daß das Übertragungselement unempfindlich ist gegen ein Fallenlassen des montierten Rastbeschlags.

Für einen sicheren Zusammenhalt der beiden Hälften des Übertragungselementes weisen diese wenigstens zwei Vorsprünge und wenigstens zwei Aussparungen auf, vorzugsweise jeweils drei solche Elemente, wobei die Vorsprünge und die Aussparungen in Umfangsrichtung abwechselnd angeordnet sind und die Vorsprünge der einen Hälfte in die Aussparungen der jeweils anderen Hälfte eingreifen. Die Vorsprünge und Aussparungen der beiden Hälften des Übertragungselementes bilden beim Zusammenfügen der beiden Hälften vorzugsweise eine Clip-Verbindung, so daß keine zusätzlichen Verbindungsteile notwendig sind. Der Zusammenhalt wird verbessert, wenn die Vorsprünge und Aussparungen gezahnt sind.

Da das Übertragungselement nur geringe Kräfte in axialer Richtung übertragen muß, kann es aus Kunststoff bestehen, was den Vorteil einer einfachen und kostengünstigen Herstellung bringt.

Ein erfindungsgemäßer Fahrzeugsitz weist wenigstens einen, vorzugsweise zwei der erfindungsgemäßen Rastbeschläge auf, die über die Stange miteinander verbunden sind.

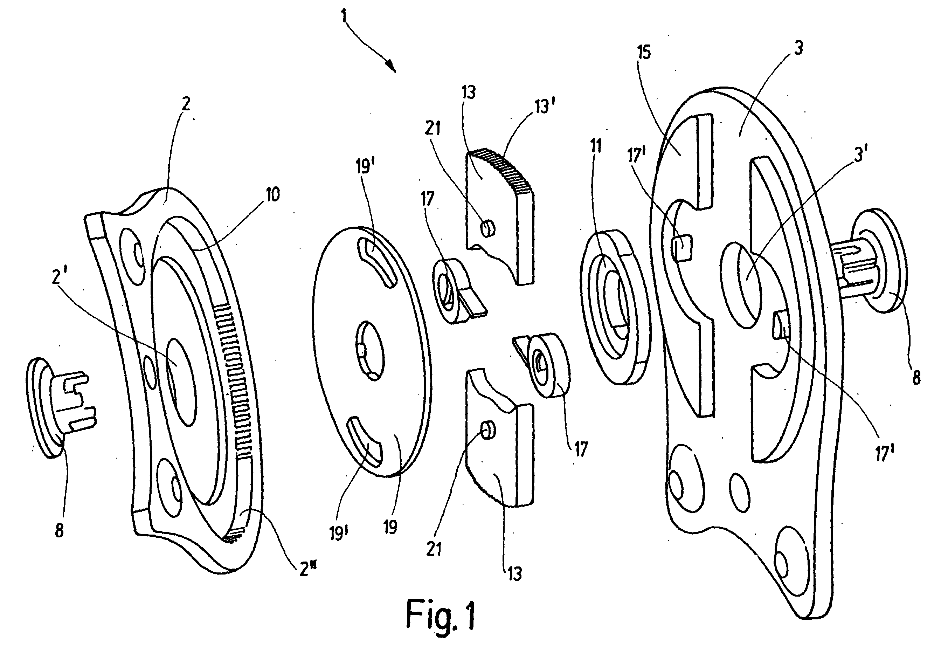

Im folgenden ist die Erfindung anhand eines in der Zeichnung dargestellten Ausführungsbeispiels näher erläutert. Es zeigen
- Fig. 1: perspektivische Ansichten der einzelnen Bauteile des Ausführungsbeispiels, bei denen die beiden Bauteile links aus einer anderen Perspektive als die anderen Bauteile dargestellt sind,

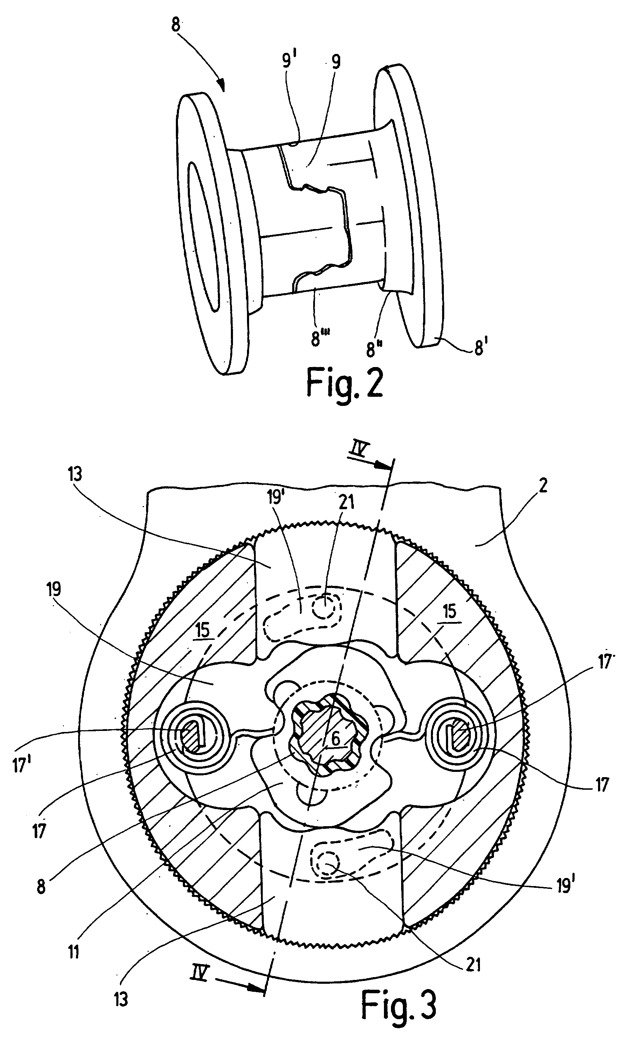

- Fig. 2: eine perspektivische Ansicht einer Axialsicherung,
- Fig. 3: einen Radialschnitt durch das Ausführungsbeispiel entlang der Linie III-III in Fig. 4,
- Fig. 4: einen Axialschnitt durch das Ausführungsbeispiel entlang der Linie IV-IV in Fig. 3,

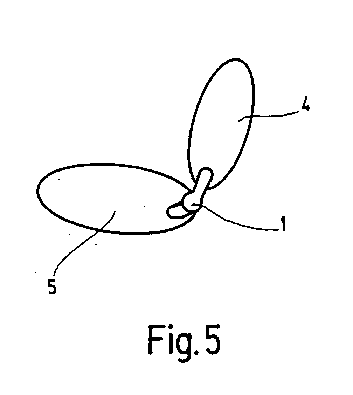

- Fig. 5: eine schematische Teilansicht eines erfindungsgemäßen Fahrzeugsitzes.

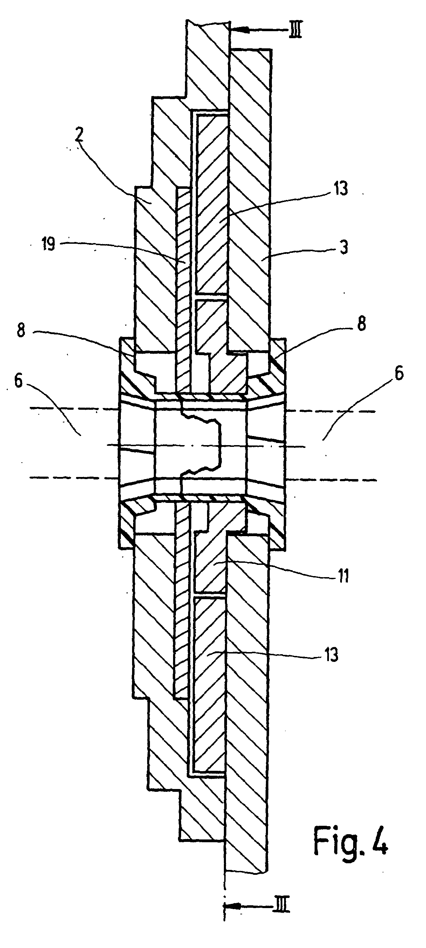

Ein als Ganzes mit 1 bezeichneter Rastbeschlag eines Fahrzeugsitzes für ein Kraftfahrzeug umfaßt ein Beschlagoberteil 2 und ein Beschlagunterteil 3. Auf den beiden Seiten des Fahrzeugsitzes ist je ein Rastbeschlag 1 angeordnet. Die am Beschlagoberteil 2 befestigte Rückenlehne 4 ist über die beiden Rastbeschläge 1 an der Sitzstruktur 5 des Fahrzeugsitzes angebracht. Die beiden Rastbeschläge 1 sind durch eine Stange 6 miteinander verbunden, welche in Fig. 4 nur angedeutet ist.

Das Beschlagoberteil 2 und das Beschlagunterteil 3 sind jeweils in der Mitte eines scheibenförmigen Abschnittes mit einer Bohrung 2' bzw. 3' als Durchlaß für die Stange 6 versehen. Durch die Bohrungen 2' und 3' ist von der Außenseite des Beschlagteils 2 bzw. 3 her, also von der vom jeweils anderen Beschlagteil 3 bzw. 2 abgewandten Seite her, je eine Hälfte einer durchgängigen Axialsicherung 8 gesteckt. Die Axialsicherung 8 umschließt als Übertragungselement mit einem innen gelegenen Übertragungsprofil die ebenfalls profilierte Stange 6.

Die beiden identisch aus Kunststoff ausgebildeten Hälften der Axialsicherung 8 weisen jeweils einen scheibenförmigen Flanschabschnitt 8' auf, der mit seiner ringförmigen inneren Stirnseite an der entsprechenden Außenseite der Beschlagteile 2 und 3 glatt anliegt. Der Flanschabschnitt 8' verhindert ein Verschieben der Axialsicherung 8 und zugleich bei der Montage und einem Transport des Rastbeschlags 1 auch ein Verschieben der Beschlagteile 2 und 3 in axialer Richtung, behindert aber nicht ein Verdrehen des Beschlagoberteils 2 relativ zum Beschlagunterteil 3. Für die Übertragung der beim Gebrauch des Rastbeschlags 1 auftretenden Axialkräfte sind in der Zeichnung nicht dargestellte Haltebleche vorgesehen. Der Flanschabschnitt 8' wirkt auch als Dichtung gegen Lackeintritt bei einer Tauchlackierung des Rastbeschlags 1.

Zur inneren Stirnseite des Flanschabschnitts 8' hin schließt sich ein leicht konischer Zwischenabschnitt 8" an, der kleinere Durchmesser als der Flanschabschnitt 8' aufweist, also gegenüber diesem radial zurückgesetzt ist. Der Zwischenabschnitt 8" weist auch einen kleineren Durchmesser als die Bohrungen 2' bzw. 3' der Beschlagteile 2 bzw. 3 auf, so daß diese nicht auf dem Zwischenabschnitt 8" aufsitzen.

Zur inneren Stirnseite des Zwischenabschnitts 8" hin schließt sich an den verjüngten Zwischenabschnitt 8" ein Übertragungsabschnitt 8''' an, der sowohl auf seiner radial äußeren Fläche wie auch auf seiner radial inneren Fläche profiliert ist. Mit seiner radial inneren Fläche liegt der Übertragungsabschnitt 8"' an der Stange 6 an. Zur eindeutigen Montage können die Profile von Stange 6 und Übertragungsabschnitt 8"' nicht-rotationssymmetrisch sein.

In axialer Richtung weist der Übertragungsabschnitt 8"' drei fingerförmige Vorsprünge 9 mit drei Aussparungen 9' von gleicher Form auf, die alle an ihren Rändern mit einer sägezahnartigen, groben Verzahnung versehen sind. Die beiden Hälften der Axialsicherung 8 werden beim Zusammenbau um 60° versetzt mit den Übertragungsabschnitten 8"' zusammengesteckt, so daß jeder fingerförmige Vorsprung 9 in eine Aussparung 9' der gegenüberliegenden Hälfte zu liegen kommt. Die sägezahnartigen Zähne der Verzahnung weisen mit ihren kurzen Flanken zum jeweiligen Flanschabschnitt 8', wobei die kurzen Flanken leicht hakenförmig ausgebildet sind. Beim Zusammenstecken der beiden Hälften der Axialsicherung 8 werden aufgrund der Elastizität des Kunststoffmaterials die kurzen Flanken der sägezahnartigen Zähne der Verzahnung federnd übereinander geschoben, um dann einander zu hintergreifen, so daß durch die Verzahnung eine Clip-Verbindung gebildet wird.

Das Beschlagoberteil 2 weist auf seiner dem Beschlagunterteil 3 zugewandten Innenseite um die Bohrung 2' herum eine ringförmige Vertiefung auf. Durch diese Vertiefung ist ein Bauraum 10 zwischen beiden Beschlagteilen 2 und 3 definiert, innerhalb dessen mehrere nachfolgend beschriebene Teile angeordnet sind. Die im Beschlagoberteil 2 ausgebildete, in Umfangsrichtung verlaufende Begrenzungsfläche des Bauraumes 10 ist mit 2" bezeichnet.

Eine Exzenterscheibe 11 in Form einer kreisförmigen Scheibe mit zwei um 180° versetzten Nocken am Außenumfang sitzt innerhalb des Bauraumes 10 auf der Axialsicherung 8. Die zusammengeclipsten Übertragungsabschnitte 8"' der Axialsicherung 8 greifen dabei verdrehsicher in die Lageröffnung der Exzenterscheibe 11 ein, so daß die Exzenterscheibe 11 mittels der als Übertragungselement wirkenden Axialsicherung 8 durch die Stange 6 drehbar ist. Über einen in axialer Richtung vorstehenden Absatz ist die Exzenterscheibe 11 in der Bohrung 3' des Beschlagunterteils 3 gelagert.

In der gleichen Ebene wie die Exzenterscheibe 11, aber mit größerem radialen Abstand zur Axialsicherung 8, sind zwei flache Zahnsegmente 13 als Riegel innerhalb des Bauraumes 10 angeordnet, die um 180° versetzt (d.h. punktsymmetrisch zueinander) in radialer Richtung beweglich sind. Jedes Zahnsegment 13 trägt an seinem radial äußeren Ende auf seinem Rand eine Verzahnung 13' und ist an seinem radial inneren Ende am Rand mit einem Spannkurvenprofil versehen, welches mit der als Steuerscheibe wirkenden Exzenterscheibe 11 zusammenwirkt. Zwischen der Verzahnung 13' und dem Spannkurvenprofil verlaufen die Randflächen des Zahnsegments 13 parallel zueinander.

Das Beschlagunterteil 3 weist eine in den Bauraum 10 vorspringende Führung 15 für die Zahnsegmente 13 auf. Die Führung 15 besteht aus zwei ungefähr C-förmigen, einander zugewandten Segmenten, die im äußeren Bereich einen Kanal für jeweils ein Zahnsegment 13 bilden und im inneren Bereich um die Axialsicherung 8 mit der Exzenterscheibe 11 herum Raum für jeweils eine Spiralfeder 17 bieten. Das Zahnsegment 13 liegt dabei mit seinen parallelen Randflächen an den Seitenwänden des Kanals an. Jede der beiden Spiralfedern 17 ist an ihrem inneren Ende an einem Zapfen 17' innerhalb des inneren Bereiches der Führung 15 und an ihrem äußeren Ende am Umfang der Exzenterscheibe 11 abgestützt. Die Spiralfedern 17 drehen die als Steuerscheibe wirkende Exzenterscheibe 11 so, daß deren Nocken über das Spannkurvenprofil die Zahnsegmente 13 radial nach außen drücken.

Eine Mitnehmerscheibe 19 ist innerhalb des Bauraumes 10 in einer flachen Vertiefung des Beschlagoberteils 2 zwischen der Ebene mit den Zahnsegmenten 13 und der um die Bohrung 2' herum gelegenen Materialpartie des Beschlagoberteils 2 angeordnet. Die Mitnehmerscheibe 19 sitzt im Ausführungsbeispiel auf der Axialsicherung 8, kann aber auch auf einem Ansatz der Exzenterscheibe 11 gelagert sein. Die Mitnehmerscheibe 19 dreht sich bei einer Drehung der Stange 6 mit. Die kreisscheibenförmige Mitnehmerscheibe 19 ist in ihrem radial äußeren Bereich um 180° versetzt mit zwei langlochförmigen Kulissen 19' versehen, welche auf ihrer radial äußeren Seite schräg zum Umfang der Mitnehmerscheibe 19 verlaufen. Von jedem Zahnsegment 13 steht auf der dem Beschlagoberteil 2 zugewandten Seite eine Rastnase 21 ab, welche bei der Montage innerhalb einer Kulisse 19 zu liegen kommt.

Werden die Zahnsegmente 13 durch eine Drehung der Exzenterscheibe 11 radial nach außen gedrückt, dreht sich die Mitnehmerscheibe 19 so mit, daß die Rastnasen 21 innerhalb der Kulissen 19' radial nach außen geschoben werden. Bei einer Drehung in der anderen Richtung zieht die Mitnehmerscheibe 19 über ihre Kulissen 19' und über die Rastnasen 21 die Zahnsegmente 13 radial nach innen.

Die Führung 15 liegt im montierten Zustand des Rastbeschlags 1 mit ihrer in Umfangsrichtung äußeren Fläche an der Begrenzungsfläche 2" des Bauraumes 10 an, wodurch das Beschlagoberteil 2 direkt auf der Führung 15 und damit auf dem Beschlagunterteil 3 gelagert ist. Auf der Begrenzungsfläche 2" ist ein Zahnkranz ausgebildet, der mit der Verzahnung 13' der Zahnsegmente 13 zusammenwirkt, wenn die Zahnsegmente 13 durch die Exzenterscheibe 11 nach außen gedrückt werden.

Sobald der Zahnkranz des Beschlagoberteils und die Verzahnung 13' des Zahnsegments 13 ineinander eingreifen, ist der Rastbeschlag 1 eingerastet, d.h. die beiden Beschlagteile 2 und 3 können nicht mehr relativ zueinander bewegt werden. Werden die Zahnsegmente 13 durch die Mitnehmerscheibe 19 zurückgezogen, können die beiden Beschlagteile 2 und 3 relativ zueinander verdreht werden. Die Führung 15 gleitet dann entlang der Begrenzungsfläche 2" des Bauraumes 10.

In einer abgewandelten Ausführungsform weist nur ein Teil der Begrenzungsfläche 2" einen Zahnkranz auf. Die Zahnsegmente 13 können dann nur in bestimmten Winkelstellungen der Beschlagteile 2 und 3 einfallen, d.h. nur in diesen Winkelstellungen rastet der Rastbeschlag 1 ein.

## Patentansprüche

1. Rastbeschlag für einen Fahrzeugsitz, insbesondere für einen Kraftfahrzeugsitz, mit einem Beschlagoberteil (2), einem Beschlagunterteil (3) und wenigstens einem Riegel (13), den ein auf einer Stange (6) angeordnetes Steuerelement (11) bewegt, **dadurch gekennzeichnet, daß** zwischen dem Steuerelement (11) und der Stange (6) ein Übertragungselement (8) vorgesehen ist, welches als Axialsicherung zum Zusammenhalt von Beschlagoberteil (2) und Beschlagunterteil (3) ausgebildet ist.

2. Rastbeschlag nach Anspruch 1, **dadurch gekennzeichnet, daß** das als Axialsicherung ausgebildete Übertragungselement (8) sich durchgängig zwischen den voneinander abgewandten Außenseiten des Beschlagoberteils (2) und des Beschlagunterteils (3) erstreckt.

3. Rastbeschlag nach Anspruch 2, **dadurch gekennzeichnet, daß** das als Axialsicherung ausgebildete Übertragungselement (8) Flanschabschnitte (8') aufweist, welche an den voneinander abgewandten Außenseiten des Beschlagoberteils (2) und des Beschlagunterteils (3) anliegen.

4. Rastbeschlag nach einem der Ansprüche 1 bis 3, **dadurch gekennzeichnet, daß** das Übertragungselement (8) aus zwei gleichen Hälften besteht.

5. Rastbeschlag nach Anspruch 4, **dadurch gekennzeichnet, daß** die beiden Hälften des Übertragungselementes (8) im Bereich zwischen Beschlagoberteil (2) und Beschlagunterteil (3) zusammengefügt sind.

6. Rastbeschlag nach Anspruch 4 oder 5, **dadurch gekennzeichnet, daß** jede der beiden Hälften des Übertragungselementes (8) wenigstens zwei Vorsprünge (9) und wenigstens zwei Aussparungen (9') aufweist, wobei die Vorsprünge (9) in die Aussparungen (9') der jeweils anderen Hälfte eingreifen.

7. Rastbeschlag nach Anspruch 6, **dadurch gekennzeichnet, daß** die Vorsprünge (9) und Aussparungen (9') der beiden Hälften des Übertragungselementes (8) beim Zusammenfügen der beiden Hälften eine Clip-Verbindung bilden.

8. Rastbeschlag nach Anspruch 7, **dadurch gekennzeichnet, daß** die Vorsprünge (9) und Aussparungen (9') der beiden Hälften des Übertragungselementes (8) gezahnt sind.

9. Rastbeschlag nach einem der Ansprüche 1 bis 8, **dadurch gekennzeichnet, daß** das Übertragungselement (8) aus Kunststoff besteht.

10. Fahrzeugsitz mit wenigstens einem Rastbeschlag nach einem der Ansprüche 1 bis 9.

## Claims

1. Locking fitting for a vehicle seat, in particular for a motor vehicle seat, having an upper fitting member (2), a lower fitting member (3) and at least one locking element (13), which is moved by a control element (11) arranged on a rod (6), **characterised in that** a transmission element (8) is provided between the control element (11) and the rod (6), which transmission element (8) is in the form of an axial safety device for holding together the upper fitting member (2) and the lower fitting member (3).

2. Locking fitting according to claim 1, **characterised in that** the transmission element (8) in the form of an axial safety device extends continuously between the outer sides of the upper fitting member (2) and the lower fitting member (3) which face away from each other.

3. Locking fitting according to claim 2, **characterised in that** the transmission element (8) in the form of an axial safety device (8) has flange portions (8') which adjoin the outer sides of the upper fitting member (2) and the lower fitting member (3) which face away from each other.

4. Locking fitting according to any one of claims 1 to 3, **characterised in that** the transmission element (8) comprises two identical halves.

5. Locking fitting according to claim 4, **characterised in that** the two halves of the transmission element (8) are joined in the region between the upper fitting member (2) and the lower fitting member (3).

6. Locking fitting according to claim 4 or 5, **characterised in that** each of the two halves of the transmission element (8) has at least two projections (9) and at least two recesses (9'), the projections (9) engaging in the recesses (9') of the other half.

7. Locking fitting according to claim 6, **characterised in that** the projections (9) and recesses (9') of the two halves of the transmission element (8) form a clip connection when the two halves are joined.

8. Locking fitting according to claim 7, **characterised in that** the projections (9) and recesses (9') of the two halves of the transmission element (8) are toothed.

9. Locking fitting according to any one of claims 1 to 8, **characterised in that** the transmission element (8) comprises plastics material.

10. Vehicle seat having at least one locking fitting according to any one of claims 1 to 9.

## Revendications

1. Dispositif d'arrêt pour un siège de véhicule, en particulier pour un siège de véhicule automobile, comprenant une partie supérieure de dispositif (2), une partie inférieure de dispositif (3) et au moins un verrou (13) entraîné par un élément de commande (11) disposé sur une tige (6), **caractérisé par le fait qu'**entre l'élément de commande (11) et la tige (6) est prévu un élément de transmission (8) qui est réalisé sous la forme d'un arrêtoir axial pour maintenir la partie supérieure de dispositif (2) et la partie inférieure de dispositif (3) assemblées.

2. Dispositif d'arrêt selon la revendication 1, **caractérisé par le fait que** l'élément de transmission (8) réalisé sous la forme d'un arrêtoir axial s'étend sans interruption entre les faces extérieures de la partie supérieure de dispositif (2) et de la partie inférieure de dispositif (3) qui sont éloignées l'une de l'autre.

3. Dispositif d'arrêt selon la revendication 2, **caractérisé par le fait que** l'élément de transmission (8) réalisé sous la forme d'un arrêtoir axial présente des segments formant joues (8') qui sont en appui contre les faces extérieures de la partie supérieure de dispositif (2) et de la partie inférieure de dispositif (3) qui sont éloignées l'une de l'autre.

4. Dispositif d'arrêt selon l'une des revendications 1 à 3, **caractérisé par le fait que** l'élément de transmission (8) est composé de deux moitiés égales.

5. Dispositif d'arrêt selon la revendication 4, **caractérisé par le fait que** les deux moitiés de l'élément de transmission (8) sont assemblées l'une à l'autre dans la région comprise entre la partie supérieure de dispositif (2) et la partie inférieure de dispositif (3).

6. Dispositif d'arrêt selon l'une des revendications 4 ou 5, **caractérisé par le fait que** chacune des deux moitiés de l'élément de transmission (8) présente au moins deux saillies (9) et au moins deux évidements (9'), les saillies (9) s'engageant dans les évidements (9') de l'autre moitié.

7. Dispositif d'arrêt selon la revendication 6, **caractérisé par le fait que** les saillies (9) et les évidements (9') des deux moitiés de l'élément de transmission (8) forment un assemblage à clip lors de l'assemblage des deux moitiés.

8. Dispositif d'arrêt selon la revendication 7, **caractérisé par le fait que** les saillies (9) et les évidements (9') des deux moitiés de l'élément de transmission (8) sont dentés.

9. Dispositif d'arrêt selon l'une des revendications 1 à 8, **caractérisé par le fait que** l'élément de transmission (8) est en matière plastique.

10. Siège de véhicule comprenant au moins un dispositif d'arrêt tel que défini à l'une des revendications 1 à 9.
